# EUROPÄISCHE PATENTSCHRIFT

(11) **EP 2 655 271 B1**
(45) Veröffentlichungstag und Bekanntmachung des Hinweises auf die Patenterteilung: **07.02.2018**
(21) Anmeldenummer: 11796993.1
(22) Anmeldetag: 13.12.2011
(51) Int. Cl.: C03B 3/02, F28C 3/14

(54) **VORRICHTUNG ZUM VORWÄRMEN VON BESCHICKUNGSGUT FÜR GLASSCHMELZANLAGEN**
DEVICE FOR PREHEATING CHARGING MATERIALS FOR GLASS MELTING FACILITIES
DISPOSITIF POUR PRÉCHAUFFER UNE MATIÈRE ALIMENTANT DES INSTALLATIONS DE FUSION DE VERRE

(30) Priorität: 22.12.2010 DE 102010055685
(43) Veröffentlichungstag der Anmeldung: 30.10.2013
(73) Patentinhaber: Beteiligungen Sorg GmbH & Co. KG, 97816 Lohr am Main (DE)
(72) Erfinder: LINDIG, Matthias, 55218 Ingelheim (DE); SORG, Helmut, 63864 Glattbach (DE)
(74) Vertreter: Keil & Schaafhausen Patent- und Rechtsanwälte PartGmbB
(86) Internationale Anmeldenummer: PCT/EP2011/072528
(87) Internationale Veröffentlichungsnummer: WO 2012/084591

(56) Entgegenhaltungen:
- DE-A1- 3 416 317
- DE-A1- 4 000 358
- DE-A1- 4 007 115

## Beschreibung

Vorrichtung zum Vorwärmen von partikelförmigem Beschickungsgut für Glasschmelzanlagen gemäß dem Oberbegriff des Anspruchs 1.

Das Vorwärmen von Beschickungsgut vor dem Einspeisen in Glasschmelzanlagen ist hinsichtlich ihrer Parameter und Geometrien ein schwierig zu beherrschender Komplex von Einflüssen aus den Bereichen der Chemie und der Physik. So kann das Beschickungsgut aus Komponenten mit sehr unterschiedlichen Partikelgrößen von Staub bis zu Briketts, mit sehr unterschiedlichen Schmelzpunkten und Mischungsverhalten reichen und unterschiedliche Mengen an freiem und gebundenem Wasser enthalten. Auch die Beheizung durch Abgase, vorzugsweise durch Abgase von Brennern aus dem Schmelzbereich, zur Rückgewinnung von Wärme aus Temperaturbereichen bis zu 1600°C und ggfls. auch darüber, ist eine wichtige Voraussetzung zur Einsparung von Wärmeenergie und zur Entlastung der Atmosphäre von giftigen Gasen wie beispielsweise von giftigen CO- und Stickstoff-Verbindungen. Auch die Zurückhaltung von Stäuben aus Abgasen der Schmelzkammer und der Vorwärmzone ist von wachsender Bedeutung. Ferner kann Wasser bzw. Wasserdampf sowohl in der Schmelzkammer als auch in dem Vorwärmbereich gebildet und/oder freigesetzt werden, weil beispielsweise durch das Beschickungsgut freies und/oder gebundenes Wasser eingebracht werden kann. Die Folgen reichen von Verklebungen des Beschickungsguts bis zu schwer zu beseitigenden Prozess-Störungen. Ferner kann auch aus der Atmosphäre angesaugte Falschluft störend sein, weil sie beispielsweise die Wärmebilanz negativ beeinflusst oder die Freisetzung von Staub fördert und Entgasungen blockiert. Letztendlich spielen auch Wechselwirkungen zwischen den Glaskomponenten und den Baustoffen eine große Rolle, wobei wiederum Relativgeschwindigkeiten von Einfluss sind.

Aus der Druckschrift DE-A-40 07 115 ist bekannt, Schüttgüter für Glasschmelzprozesse in senkrechten Schächten vorzuwärmen, durch die in mehreren Etagen waagrechte Abgaskanäle hindurchgeführt sind, die nach unten hin offen sind. In diese Kanäle wird das Abgas aus dem nachgeschalteten Schmelzprozess in gleichen Richtungen eingeführt. An der Unterseite der Abgaskanäle tritt es wieder aus und wird nach dem Durchströmen des Schüttguts in die unteren Öffnungen der jeweils darüber liegenden Abgaskanäle wieder eingeführt und in der gleichen Richtung wieder abgesaugt. Die Steigleitung für das Abgas endet im Kopfbereich an Anschlüssen, die jedoch nicht mit Leitungen verbunden sind, so dass die Verteilung hauptsächlich den örtlichen Strömungswiderständen im Schüttgut entspricht, was im Übrigen auch für alle anderen Strömungswege zwischen den einzelnen Etagen gilt. Durch die Reihenschaltungen der Strömungswege und die Verwendung eines Sauglüfters wird im System ein Unterdruck erzeugt, durch den der unerwünschte Effekt des Einziehens von Falschluft noch verstärkt wird.

Aus der Druckschrift DE-A-40 00 358 sind ein Verfahren zum stetigen Trocknen und Vorwärmen eines Aufgabegutstroms eines Glasschmelzofens durch dessen Abgas sowie eine Vorrichtung zur Durchführung des Verfahrens bekannt. Die Vorrichtung besteht im Wesentlichen aus einem außenseitigen tragenden Rahmen und darin übereinander angeordnet von oben nach unten aufeinander folgend einem Einführungsteil, einem Trocknungs- und Vorwärmteil und einem Entnahmeteil. Der Trocknungs- und Vorwärmteil besteht im Wesentlichen aus zwei Aufgabegutschächten, die jeweils durch Schachtwände begrenzt sind. Die Schachtwände sind in der Form von geneigten Lamellen ausgebildet.

Auch die Druckschrift DE-A-34 16 317 offenbart ein Verfahren zum Vorwärmen von Rohstoffen für die Glasherstellung. In einem Bunker strömt das Abgas aus dem Schmelzprozess zickzackförmig durch den Bunker. Die Strömung des Abgases im Bunker erfolgt entlang einer Vielzahl von horizontalen Strömungskanälen, die jeweils aus einem länglichen, gleichschenkligen Winkelprofil gebildet werden, das ein Dach für das Glasscherbengemisch im Bunker formt. Unterhalb der Winkelprofile bildet sich ein Schüttkegel im Glasscherbengemisch aus, der die zweite Hälfte der Strömungskanäle bildet. Die Strömungskanäle sind auf Lücke liegend annähernd gleichmäßig im Innern des Bunkers verteilt.

Der vorliegenden Erfindung liegt daher die Aufgabe zugrunde, eine Vorrichtung zum Vorwärmen von partikelförmigem Beschickungsgut für Glasschmelzanlagen der eingangs genannten Art zu schaffen, bei der ein hoher Anteil der Wärme aus den Abgasen bei niedriger Bauhöhe und niedrigem Volumen zurückgewonnen wird und bei der das Einsaugen von Umgebungsluft als Falschluft und eine Umweltverschmutzung auf ein Mindestmaß reduziert wird. Außerdem sollen bereits vorhandene Vorrichtungen dieser Art auf einfache Weise entsprechend nach- oder umgerüstet werden können.

Diese Aufgabe wird erfindungsgemäß durch die Merkmale des kennzeichnenden Teils des Anspruchs 1 gelöst. Da die Abzugsleitung an die Zufuhrleitung für die Abgase zum Vorwärmschacht angeschlossen ist, herrscht in dem abgezweigten Teilstrom annähernd der gleiche Unterdruck wie in dem Abgasstrom in der Zuleitung zum Wärmetauscher. Mittels des Sperrgases lässt sich dann das Einsaugen von Falschluft in das Beschickungsgut weitgehend verhindern. Dieser technische Effekt wird mit Hilfe der nachfolgend beschriebenen Ausgestaltungen der vorliegenden Erfindung noch verstärkt.

Erfindungsgemäß ist vorgesehen, dass die Abgasdurchführungen des Wärmetauschers auf ihrer Abfuhrseite an einen Saugzug angeschlossen sind, dessen Saugleistung durch einen Drucksensor geregelt wird. Dadurch können Druckverluste bei der Durchleitung der Abgase durch den Wärmetauscher ausgeglichen werden.

Um die Menge des abgezweigten Teilstroms einstellen zu können, ist erfindungsgemäß vorgesehen, dass in der Abzugsleitung eine Drossel angeordnet ist.

Gemäß einer weiteren Ausgestaltung der Erfindung sind die Sperrgasleitungen innerhalb des Vorwärmschachtes an ihren Enden verschlossen. Das ermöglicht einen gerichteten Austritt der Abgase in das Beschickungsgut.

Um auch bei ungenügenden Druckverhältnissen eine sichere Einbringung der Abgase in das Beschickungsgut zu gewährleisten ist erfindungsgemäß vorgesehen, dass in der Abzugsleitung ein Druckerzeuger angeordnet ist. Dieser kann zweckmäßigerweise ein Heißgasgebläse sein.

Es hat sich als vorteilhaft erwiesen, dass zur Regelung der Abfuhr der Abgase über die unten offenen Sperrgasleitungen der Druckerzeuger an einen Drucksensor angeschlossen ist, der oberhalb der Sperrgasleitungen in das Beschickungsgut hineinragt.

Um innerhalb des Vorwärmschachtes ein konstantes Strömungs- und Druckgleichgewicht zu ermöglichen, ist erfindungsgemäß vorgesehen, dass mehrere Sperrgasleitungen über den Querschnitt verteilt angeordnet sind.

Die Erfindung und deren Vorteile werden nachfolgend anhand von zwei Ausführungsbeispielen sowie deren Wirkungsweisen und Vorteilen näher erläutert, die in der Zeichnung dargestellt sind.

Es zeigen:
- Figur 1: in einer schematischen Darstellung einen senkrechten Schnitt durch eine erfindungsgemäße Vorrichtung zum Vorwärmen des Beschickungsguts von Glasschmelzanlagen, bestehend aus einem Vorwärmschacht mit zugeordneten Aggregaten,
- Figur 2: eine Fig. 1 entsprechende Darstellung einer weiteren Ausführungsform einer erfindungsgemäßen Vorrichtung mit einem Heißgasgebläse und
- Figur 3: einen Horizontalschnitt durch den Vorwärmschacht im Bereich der in den Figuren 1 und 2 gezeigten Sperrgasleitungen.

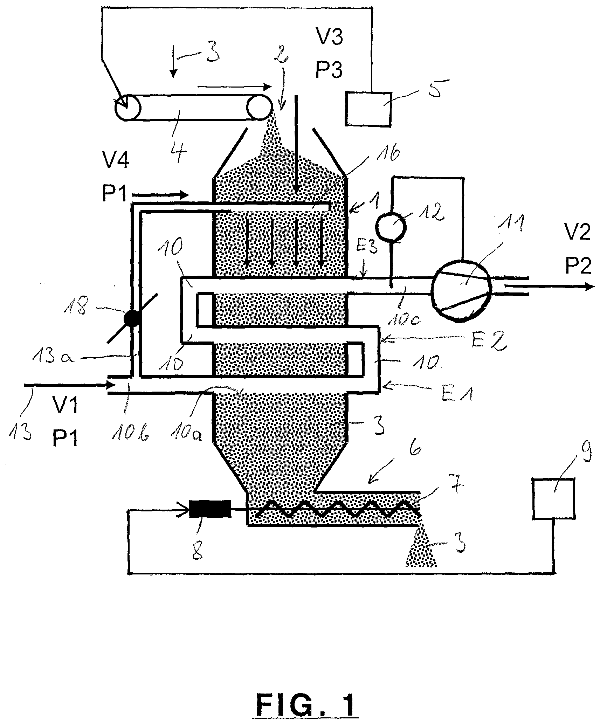

In Figur 1 ist ein Vorwärmschacht 1 dargestellt, der am oberen Ende eine Beschickungsöffnung 2 für das Beschickungsgut 3 besitzt, das in dem Vorwärmschacht 1 eine absinkende Säule bildet. Die Zufuhr des Beschickungsguts erfolgt über einen Bandförderer 4, dessen Förderleistung über einen Füllstandssensor 5 so geregelt wird, dass die Beschickungsöffnung 2 nicht verschlossen wird. Am unteren Ende befindet sich eine Entladungsvorrichtung 6 für das vorgewärmte Beschickungsgut 3. Diese besitzt eine Förderschnecke 7, die durch einen Motor 8 angetrieben wird. Dessen Drehzahl und damit die Fördermenge pro Zeiteinheit werden durch einen Sensor 9 gesteuert, der mit einem Füllstandsmesser an einer Wanne für die Glasschmelze verbunden ist, was nicht dargestellt ist. Der Vorwärmschacht 1 ist nach außen hin thermisch isoliert, so dass der größte Teil der zugeführten Wärmemenge an das Beschickungsgut 3 übertragen wird. Dessen Bewegung im Vorwärmschacht 1 erfolgt durch Schwerkraft.

Die Vorwärmung des Beschickungsguts 3 erfolgt durch die sehr heißen Abgase 13 aus der Schmelzkammer, auch Heiz- oder Heißgase genannt, die über ein nachstehend beschriebenes Leitungssystem durch den Vorwärmschacht 1 hindurchgeführt werden. In dem Vorwärmschacht 1 befinden sich bei dem beschriebenen Ausführungsbeispiel in drei Etagen E1, E2 und E3 als Wärmetauscher dienende röhrenförmige Abgasdurchführungen 10, von denen in jeder Etage wenigstens zwei Abgasdurchführungen 10 angeordnet sind, deren Achsen in jeweils einer waagrechten Ebene angeordnet sind. Diese Abgasdurchführungen 10 sind innerhalb des Vorwärmschachtes 1 nach unten hin mit Öffnungen 10a versehen, die einen Austritt der heißen Abgase erlauben. Bei der Anzahl der Etagen kann es sich um eine, zwei oder mehr Etagen handeln. Anstatt eines röhrenförmigen Querschnitts können die Abgasdurchführungen auch ein kastenförmiges oder rautenförmiges Profil haben oder einen sonstigen Querschnitt aufweisen.

Die aus der nicht dargestellten Schmelzanlage kommenden heißen Abgase treten über eine Zufuhrleitung 10b auf der Zufuhrseite des Vorwärmschachtes 1 in die mindestens eine Abgasdurchführung 10 ein und werden zuerst der untersten Etage E1 zugeführt und durchströmen den Wärmetauscher im Kreuzgegenstrom. Das Abgas verlässt die Abgasdurchführung 10 auf deren Abfuhrseite über eine Abfuhrleitung 10c, von wo das Abgas an ein nicht dargestelltes Reinigungssystem und schließlich an einen Kamin weitergeleitet wird. Die bei der Durchleitung der Abgase durch den röhrenförmigen Wärmetauscher durch Reibung entstehenden Druckverluste werden durch einen Saugzug 11 ausgeglichen, dessen Saugleistung durch einen Drucksensor 12 geregelt wird, der den Druck im Beschickungsgut 3 am oberen Ende des Vorwärmschachtes 1 ermittelt. Damit ist gewährleistet, dass in der Abgasdurchführung 10 bzw. im Abgas 13 ständig ein leichter Unterdruck herrscht.

Aus der Abgasdurchführung 10 wird über eine Abzugsleitung 13a eine Teilmenge des Abgases 13 abgezweigt und einer Sperrgasleitung 16 zugeführt, die sich oberhalb der Abgasdurchführung 10 befindet. Auf der Unterseite der an ihren Enden verschlossenen Sperrgasleitung 16 sind Öffnungen ausgebildet, durch die das Abgas in das Beschickungsgut 3 ausgeblasen wird, was durch vier Pfeile angedeutet ist. Dieser Gasaustritt wird auch als Sperrgas bezeichnet. Die Menge des zur Sperrgasleitung 16 abgezweigten Teilstroms V4 kann über eine Drossel 18 eingestellt werden.

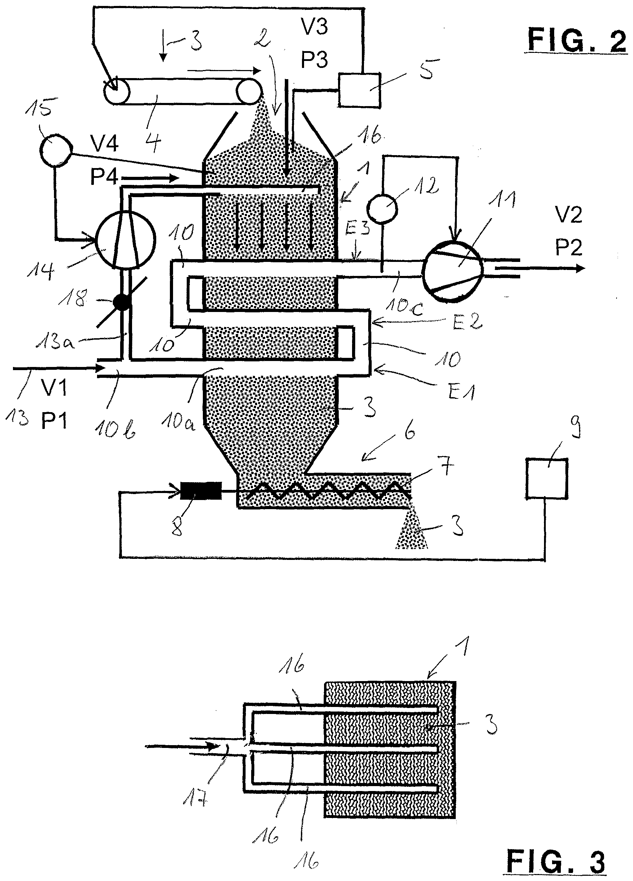

Die im dargestellten Ausführungsbeispiel röhrenförmigen Abgasdurchführungen 10 sind so ausgelegt und der Saugzug 11 wird so gesteuert, dass oberhalb der Sperrgasleitung 16 gegenüber dem von außen anliegenden Atmosphärendruck P3 kein Unterdruck entsteht, damit keine Falschluft V3 durch die Beschickungsöffnung 2 angesaugt wird. Die Abgasdurchführungen 10 und die Sperrgasleitungen 16 können, wie in Figur 3 dargestellt, auch mehrfach nebeneinander in waagrechten Ebenen angeordnet sein, die senkrecht zur Zeichenebene verlaufen. Durch diese Ausgestaltungen wird gewährleistet, dass innerhalb des Vorwärmschachtes 1 ein konstantes Strömungs- und Druckgleichgewicht besteht, was ein Ansaugen von kalter Falschluft durch die Beschickungsöffnung 2 weitgehend verhindert. Sollte der in der Abzugsleitung 13a anliegende Unterdruck nicht ausreichend sein, kann der Zug in der Abzugsleitung durch ein zusätzlich vorgesehenes Heißgasgebläse 14 verändert, insbesondere erhöht werden.

Aus Figur 3 ist zu ersehen, dass in dem dargestellten Ausführungsbeispiel drei Sperrgasleitungen 16 in Form einer waagrechten Gabel an eine Hauptleitung 17 angeschlossen sind. Die Sperrgasleitungen 16 sind dabei gleichmäßig über den quadratischen Querschnitt des Vorwärmschachtes 1 verteilt.

Nachfolgend wird die Funktionsweise der Vorrichtung näher beschrieben:

Der heiße Abgasstrom V1 aus der nicht dargestellten Glasschmelzanlage wird in der Zufuhrleitung 10b zur Abgasdurchführung 10 der Vorrichtung zum Vorwärmen des Beschickungsguts 3 geleitet. Dabei herrscht in der Zufuhrleitung 10b auf der Zufuhrseite des Vorwärmschachtes 1 ein Unterdruck P1. Die Abgasdurchführung 10 des Wärmetauschers selbst stellt einen Strömungswiderstand dar. In dem System von Abgasdurchführungen baut sich daher ein weiterer Druckverlust auf. In der Abfuhrleitung 10c auf der Abfuhrseite des Wärmetauschers weist der Abgasstrom V2 einen Unterdruck P2 auf, der größer ist als der Unterdruck P1. Der in den Abgasdurchführungen 10 des Wärmetauschers herrschende Unterdruck kann durch den Saugzug 11 verändert werden.

Von dem Abgasstrom V1, der dem Wärmetauscher zugeführt wird, wird über die Abzugsleitung 13a ein Teilstrom V4 abgezweigt. Dieser Teilstrom hat annähernd den gleichen Unterdruck wie der Abgasstrom V1 in der Zufuhrleitung 10b. Die Druckdifferenz zwischen P1 und P2 reicht normalerweise aus, dass der Teilstrom V4 angesaugt wird.

Aufgrund der natürlichen Druckdifferenz in dem Teilstrom V4 gegenüber dem Abgasstrom entweicht das Abgas 13 in der obersten Ebene des Vorwärmschachtes 1 über die Sperrgasleitungen 16 aus dem Wärmetauscher in das Beschickungsgut 3. Der in das Beschickungsgut abgegebene Abgasstrom steht auf dem Unterdruckniveau von P2. Der Teilstrom V4 steht mangels zusätzlicher Druckverluste auf dem Niveau P1. Die Menge des Teilstroms V4 kann, wie oben ausgeführt, über die Drossel 18 eingestellt werden.

Zur Erhöhung des Unterdrucks in der Abzugsleitung 13a kann zusätzlich ein Heißgasgebläse 14 in der Abzugsleitung angeordnet sein. Die Menge des Teilstroms V4 lässt sich damit so regeln, dass sich über den Sperrgasleitungen 16 ein Druck einstellt, der annähernd dem Umgebungsdruck (Atmosphärendruck) P3 entspricht. Durch das Heißgasgebläse 14 und die Sperrgasleitungen 16 wird ein noch nicht wesentlich abgekühlter Teilstrom V4 der Abgase 13, der beispielhaft 10% der Gesamtmenge der zugeführten Abgase betragen kann, auf einen geringeren Unterdruck im Vergleich zum Abgasstrom 13 gebracht.

Durch die Druckverhältnisse in der Schüttung gelangt der Teilstrom V4 aus den Sperrgasleitungen 16 in Richtung der Pfeile nach unten zu den Abgasdurchführungen 10, durch die die Hauptmenge der Abgase 13 geleitet wird. Dadurch wird das Ansaugen von Falschluft V3 durch die Beschickungsöffnung 2 weitgehend verhindert, und auch die Schütthöhe über den Sperrgasleitungen 16 kann deutlich verringert werden, so dass sich das Volumen und die Bauhöhe des Vorwärmschachtes 1 und damit dessen Baukosten entsprechend verringern.

Insbesondere können bereits vorhandene Vorwärmanlagen durch den nachträglichen Einbau derartiger Sperrgasleitungen 16 auf einfache Weise und kostengünstig umgerüstet werden, wodurch deren Betriebskosten gesenkt werden können. Der wesentliche Vorteil der Erfindung liegt darin, den Anteil von Falschluft klein zu halten, so dass
a) die Schütthöhe des Beschickungsguts 3 über dem Wärmetauscher gering gehalten werden kann, was die Bauhöhe und damit auch die Kosten reduziert,
b) ein Teilstrom des vorhandenen Abgases dazu verwendet wird, als Sperrgas einen Einzug von Falschluft zu verhindern, und
c) der Wirkungsgrad der Glasschmelzanlage erhöht und die Umwelt geschont wird.

**Bezugszeichenliste:**

| | | | |
|---|---|---|---|
| 1 | Vorwärmschacht | E1 | Etage |
| 2 | Beschickungsöffnung | E2 | Etage |
| 3 | Beschickungsgut | E3 | Etage |
| 4 | Bandförderer | | |
| 5 | Füllstandssensor | P1 | Unterdruck |
| 6 | Entladungsvorrichtung | P2 | Unterdruck |
| 7 | Förderschnecke | P3 | Atmosphärendruck |
| 8 | Motor | | |
| 9 | Sensor | | |
| 10 | Abgasdurchführung (Wärmetauscher) | | |
| 10a | Öffnung | | |
| 10b | Zufuhrleitung auf der Zufuhrseite von 10 (Abgaszuführung) | | |
| 10c | Abfuhrleitung auf der Abfuhrseite von 10 | | |
| 11 | Saugzug | | |
| 12 | Drucksensor | | |
| 13 | Abgase (Abgasstrom) | | |
| 13a | Abzugsleitung (Abzweigleitung) | | |
| 14 | Heißgasgebläse | | |
| 15 | Drucksensor | | |
| 16 | Sperrgasleitungen | | |
| 17 | Hauptleitung für 16 | | |
| 18 | Drossel | | |
| | | | |
| V1 | Abgasstrom in Zuleitung zum Wärmetauscher | | |
| V2 | Abgasstrom nach Wärmetauscher | | |
| V3 | Falschluft | | |
| V4 | Teilstrom | | |

## Patentansprüche

1. Vorrichtung zum Vorwärmen von partikelförmigem Beschickungsgut (3) für Glasschmelzanlagen mittels deren Abgase, mit einem senkrechten Vorwärmschacht (1), durch den sich ein Wärmetauscher erstreckt, durch den die Abgase geleitet werden, wobei die gegen das Eindringen von Partikeln geschützten Abgasdurchführungen (10) des Wärmetauschers entlang ihres Umfangs Öffnungen aufweisen, und wobei das obere Ende des Vorwärmschachtes (1) eine Beschickungsöffnung (2) für das Beschickungsgut (3) und das untere Ende eine Entladungsvorrichtung (6) für das vorgewärmte Beschickungsgut (3) aufweist, und wobei der Eingang der Abgasdurchführungen (10) des Wärmetauschers mit einer Zufuhrleitung und der Ausgang mit einer Abfuhrleitung für die Abgase verbunden sind, wobei die Abgasdurchführungen (10) des Wärmetauschers auf ihrer Abfuhrseite (10c) an einen Saugzug (11) angeschlossen sind, dessen Saugleistung durch einen Drucksensor (12) geregelt wird, wobei die Abgasdurchführungen (10) des Wärmetauschers im Kreuzgegenstrom über mehrere waagrechte Etagen (E1, E2, E3) in dem Vorwärmschacht (1) verlaufen, wobei von der Zufuhrleitung (10b) für die Abgase (13) eine Abzugsleitung (13a) für den Abzug einer Teilmenge der Abgase (13) abzweigt und wobei die Abzugsleitung (13a) mit mindestens einer nach unten offenen Sperrgasleitung (16) verbunden ist, die in dem Bereich des Beschickungsguts (3) oberhalb der Abgasdurchführungen (10) zur Abgabe der Abgase in das Beschickungsgut (3) angeordnet ist.

2. Vorrichtung nach Anspruch 1, **dadurch gekennzeichnet, dass** in der Abzugsleitung (13a) eine Drossel (18) angeordnet ist, mit der die Menge des abgezweigten Teilstroms einstellbar ist.

3. Vorrichtung nach Anspruch 1, **dadurch gekennzeichnet, dass** die Sperrgasleitungen (16) innerhalb des Vorwärmschachtes (1) an ihren Enden verschlossen sind.

4. Vorrichtung nach einem der Ansprüche 1 oder 2, **dadurch gekennzeichnet, dass** in der Abzugsleitung (13a) ein Druckerzeuger angeordnet ist.

5. Vorrichtung nach Anspruch 4, **dadurch gekennzeichnet, dass** der Druckerzeuger ein Heißgasgebläse (14) ist.

6. Vorrichtung nach einem der vorhergehenden Ansprüche, **dadurch gekennzeichnet, dass** zur Regelung der Abfuhr der Abgase über die unten offenen Sperrgasleitungen (16) der Druckerzeuger an einen Drucksensor (15) angeschlossen ist, der oberhalb der Sperrgasleitungen (16) in das Beschickungsgut (3) hineinragt.

7. Vorrichtung nach einem der vorhergehenden Ansprüche, **dadurch gekennzeichnet, dass** mehrere Sperrgasleitungen (16) über den Querschnitt verteilt angeordnet sind.

## Claims

1. A device for preheating particulate charging material (3) for glass melting plants by means of the exhaust gases thereof, having a vertical preheating shaft (1), through which a heat exchanger extends, through which the exhaust gases are conveyed, the exhaust-gas ducts (10) of the heat exchanger, which are protected from the penetration of particles, having openings along the periphery thereof, and the upper end of the preheating shaft (1) having a charging opening (2) for the charging material (3) and the lower end having a discharge opening (6) for the preheated charging material (3), and the inlet of the exhaust-gas ducts (10) of the heat exchanger being connected to a supply line and the outlet being connected to a discharge opening for the exhaust gases, the exhaust-gas ducts (10) of the heat exchanger being connected on the discharge side (10c) thereof to a suction draught (11), the suction power thereof being regulated by means of a pressure sensor (12), the exhaust-gas ducts (10) of the heat exchanger running in a cross-countercurrent across a plurality of horizontal stages (E1, E2, E3) in the preheating shaft (1), a drain line (13a) for draining a portion of the exhaust gases (13) branching off from the supply line (10b) for the exhaust gases (13), and the drain line (13a) being connected to at least one downwardly open barrier gas line (16), which is arranged in the region of the charging material (3) above the exhaust-gas ducts (10) for outputting the exhaust gases into the charging material (3).

2. The device according to Claim 1, **characterized in that** a throttle (18) is arranged in the drain line (13a), using which throttle the quantity of the branched partial flow can be adjusted.

3. The device according to Claim 1, **characterized in that** the barrier gas lines (16) are closed inside the preheating shaft (1) at the ends thereof.

4. The device according to one of Claims 1 or 2, **characterized in that** a pressure generator is arranged in the drain line (13a).

5. The device according to Claim 4, **characterized in that** the pressure generator is a hot gas fan (14).

6. The device according to one of the preceding claims, **characterized in that** to regulate the discharge of the exhaust gases via the barrier gas lines (16), which are open at the bottom, the pressure generator is connected to a pressure sensor (15), which projects into the charging material (3) above the barrier gas lines (16).

7. The device according to one of the preceding claims, **characterized in that** a plurality of barrier gas lines (16) are arranged in a distributed manner over the cross section.

## Revendications

1. Dispositif pour préchauffer une matière particulaires alimentant (3) des installations de fusion de verre au moyen des gaz d'évacuation de celles-ci, avec un puits de préchauffage (1) perpendiculaire à travers lequel s'étend un échangeur de chaleur, à travers lequel les gaz d'évacuation sont dirigés, les passages de gaz d'évacuation (10) protégés contre la pénétration de particules de l'échangeur de chaleur comportant des ouvertures le long de sa périphérie et l'extrémité supérieure du puits de préchauffage (1) comportant une ouverture d'alimentation (2) pour le matériau d'alimentation (3) et l'extrémité inférieure un dispositif de décharge (6) pour le matériau d'alimentation (3) préchauffé et l'entrée des passages de gaz d'évacuation (10) de l'échangeur de chaleur étant reliée à un conduit d'alimentation et la sortie à un conduit d'évacuation pour les gaz d'évacuation, les passages de gaz d'évacuation (10) de l'échangeur de chaleur étant raccordés sur leur côté d'évacuation (10c) à un tirage d'aspiration (11), dont la puissance d'aspiration est réglée par un capteur de pression (12), les passages de gaz d'évacuation (10) de l'échangeur de chaleur passant en contre-courant croisé sur plusieurs étages horizontaux (E1, E2, E3) dans le puits de préchauffage (1), un conduit d'évacuation (13a) pour l'évacuation d'une quantité partielle des gaz d'évacuation (13) dérivant du conduit d'alimentation (10b) pour les gaz d'évacuation (13) et le conduit d'évacuation (13a) étant relié à au moins un conduit de gaz d'arrêt ouvert (16), qui est disposé dans la zone du matériau d'alimentation (3) au-dessus des passages de gaz d'évacuation (10) pour l'évacuation des gaz d'évacuation dans le matériau d'alimentation (3).

2. Dispositif selon la revendication 1, **caractérisé en ce que** dans le conduit d'évacuation (13a) est disposée un restricteur (18) avec lequel la quantité du flux partiel dérivé peut être réglé.

3. Dispositif selon la revendication 1, **caractérisé en ce que** les conduits de gaz d'arrêt (16) à l'intérieur du puits de préchauffage (1) sont fermés à leurs extrémités.

4. Dispositif selon l'une quelconque des revendications 1 ou 2, **caractérisé en ce que** dans le conduit d'évacuation (13a) est disposé un générateur de pression.

5. Dispositif capteur selon la revendication 4, **caractérisé en ce que** le générateur de pression est une soufflante à gaz chauds (14).

6. Dispositif selon l'une quelconque des revendications précédentes, **caractérisé en ce que** pour réguler l'évacuation des gaz d'évacuation par le biais des conduits de gaz d'arrêt ouverts vers le bas (16), le générateur de pression est raccordé à un capteur de pression (15) qui dépasse au-dessus des conduits de gaz d'arrêt (16) dans le matériau d'alimentation (3).

7. Dispositif selon l'une quelconque des revendications précédentes, **caractérisé en ce que** plusieurs conduits de gaz d'arrêt (16) sont disposés répartis sur la section transversale.
